# EUROPÄISCHE PATENTSCHRIFT

(11) **EP 4 069 890 B1**
(45) Veröffentlichungstag und Bekanntmachung des Hinweises auf die Patenterteilung: **04.01.2023**
(21) Anmeldenummer: 20812014.7
(22) Anmeldetag: 23.11.2020
(51) Int. Cl.: C25B 1/46, C25B 1/04, C25B 9/19, C25B 9/65

(54) **VERWENDUNG EINES TEXTILS, ZERO-GAP-ELEKTROLYSEZELLE UND HERSTELLUNGSVERFAHREN DAFÜR**
USE OF A TEXTILE, ZERO-GAP ELECTROLYTIC CELL AND PRODUCTION PROCESS THEREFOR
UTILISATION D'UNE CELLULE ÉLECTROLYTIQUE TEXTILE SANS ENTREFER ET SON PROCÉDÉ DE FABRICATION

(30) Priorität: 06.12.2019 DE 102019219027
(43) Veröffentlichungstag der Anmeldung: 12.10.2022
(73) Patentinhaber: thyssenkrupp nucera AG & Co. KGaA, 44141 Dortmund (DE)
(72) Erfinder: AUSTENFELD, Sebastian, 59494 Soest (DE); WAGNER, Michael, 42115 Wuppertal (DE); TOROS, Peter, 45326 Essen (DE); WOLTERING, Peter, 48485 Neuenkirchen (DE)
(74) Vertreter: thyssenkrupp Intellectual Property GmbH
(86) Internationale Anmeldenummer: PCT/EP2020/083065
(87) Internationale Veröffentlichungsnummer: WO 2021/110457

(56) Entgegenhaltungen:
- WO-A1-2019/175199
- US-A- 4 608 144
- US-A1- 2017 191 175

## Beschreibung

Die Erfindung betrifft die Verwendung eines Textils als Beabstandungsmittel zwischen einem Gehäuse oder einer Stützstruktur und einer Elektrode oder dem Unterbau einer Elektrode einer zero-gap-Elektrolysezelle. Die Erfindung betrifft ferner sowohl eine mit einem solchen Textil ausgestattete zero-gap-Elektrolysezelle als auch ein Verfahren zur Herstellung einer solchen zero-gap-Elektrolysezelle.

Die Elektrolyse von Wasser in Sauerstoff und sogenannten "grünen" Wasserstoff stellt in Zeiten gesteigerten Umweltbewusstseins und ambitionierter Ziele bezüglich der CO2-Einsparung ("Energiewende") eine vielversprechende Technologie dar, um unter Verwendung von erneuerbaren Energien, wie Wind-, Wasser- und Sonnenenergie, einen CO2-freien Energieträger herzustellen. Dieser "grüne" Wasserstoff kann beispielsweise als Energiespeicher, als Kraftstoff für Fahrzeuge oder zur Erzeugung von Chemikalien verwendet werden. Herzstück einer "grünen" Wasserstoffproduktionsanlage auf Basis der Wasser-Elektrolyse ist wie auch bei der elektrolytischen Herstellung von Chlor und Natronlauge (Chlor-Alkali-Elektrolyse) die Elektrolysezelle. Dies ist mitunter ein Grund, warum die Elektrolyse-Technologie fortlaufend weiterentwickelt wird, beispielsweise hinsichtlich der Optimierung des Wirkungsgrades.

Elektrolysezellen nach der Membran-Technologie zeichnen sich durch eine Kathodenund eine Anodenkammer mit der jeweiligen Elektrode und einem Elektrolyten aus, wobei die Elektroden in einem Abstand zu einer die beiden Elektroden trennenden ionenselektiven Membran angeordnet sind. Es hat sich jedoch gezeigt, dass dieses Zelldesign suboptimal hinsichtlich der erreichten Wirkungsgrade ist.

Als besonders energieeffiziente Elektrolysezelle ist daher die sogenannte "zero-gap-Elektrolysezelle" bekannt geworden (siehe US 9,404,191 B2 oder EP 2 436 804 A1). Hierbei sind - wie die der Terminus "zero-gap" indiziert - Kathode und Anode lediglich durch die Membran getrennt, so dass sowohl Anode als auch Kathode an der Membran kontaktierend anliegen. Hierdurch wird der Zell-Widerstand abgesenkt, was mit einer erheblichen Energieeinsparung einhergeht. Zudem führt dies zu einer Anhebung der Membranlebensdauer.

Bei einer zero-gap-Elektrolysezelle ist es gängig, zwischen einer auch als Wanne bezeichneten Gehäuserückwand und der an die Membran flächig und gleichmäßig anzupressenden Elektrode ein sogenanntes elastisches Element anzuordnen. Dieses elastische Element kann durch eine metallische, beispielsweise aus Nickel gefertigte Wendel oder ein feinmaschiges Netz aus feingewebten Nickelfäden, die aufgrund ihrer besonderen Struktur wie eine Feder wirken, gebildet sein, die zwischen Elektrode und Gehäuserückwand eingespannt ist und so die erforderliche homogene und wohl dosierte Flächenpressung der Elektrode an die Membran sicherstellt. Zugleich hat das bekannte elastische Element die Aufgabe, den Strom von der Elektrode zur Gehäuserückwand abzuführen.

Neben dem elastischen Element verfügt eine solche zero-gap-Elektrolysezelle auf der Kathodenseite regelmäßig über mit dem Gehäuse verschweißte Einbauten (z.B. gerade Stege) und eine Stützstruktur für das elastische Element (z.B. Streckmetalle), welche der mechanischen Fixierung der Kathodenelektrode dienen.

Als nachteilig bei den vorbekannten zero-gap-Elektrolysezellen stellt sich durch die Ausbildung des elastischen Elementes aus Nickel ein nicht unerheblicher Materialverbrauch an Nickel sowie ein hoher Schweiß- beziehungsweise Herstellungsaufwand zur Fixierung der Kathodenelektrode heraus.

Aus US 2017/0191175 A1 ist eine Gasdiffusionsschicht für eine Eletkrolysezelle mit einer Federkomponente bekannt, die aus einem Spiralgeflecht besteht. Das Spiralgeflecht besteht aus hintereinander angeordneten Querstäben, um die eine Vielzahl von Spiralen gewickelt sind. Das Spiralgeflecht entsteht, wenn Spiralen mit gleicher Geometrie, aber mit unterschiedlicher Windungsrichtung abwechselnd ineinander geschoben und durch die Querstäbe verbunden werden. Die Querstäbe sind z.B. aus Kunststoff gefertigt. Die Spiralen bestehen aus einem elektrisch leitfähigen Material wie z.B. Edelstahl, Titan, Niob, Tantal oder Nickel.

WO 2019 / 175199 A1 beschreibt eine Gasverteilerstruktur für eine Brennstoffzelle mit einem Gewebe, welches zumindest zwei Arten von Fasern aufweist, nämlich Basisfasern zum Herstellen einer Grundstruktur des Gewebes und Funktionsfasern zum Unterstützen eines Leitens von elektrischem Stroms zwischen einer Bipolarplatte und einer Elektrodeneinheit, sowie eines mechanischen Kraftaufnehmens zwischen der Bipolarplatte und der Elektrodeneinheit.

Ausgehend von diesem diskutierten Stand der Technik liegt der Erfindung daher die Aufgabe zu Grunde, eine zuverlässige mechanische Fixierung und elektrische Kontaktierung der aktiven Elektrode bei verringertem Montage- und Materialaufwand bereitzustellen.

Gelöst wird diese Aufgabe erfindungsgemäß dadurch, dass ein Textil als Beabstandungsmittel zwischen Elektrode und Gehäuse der Elektrolysezelle eingesetzt wird, das sowohl ein mechanisches Verbindungsmittel aus einem elastischen Kunststoffmaterial als auch ein sich von dem mechanischen Verbindungsmittel unterscheidendes elektrisches Verbindungsmittel umfasst.

Das erfindungsgemäß verwendete Textil weist sowohl ein mechanisches als auch ein elektrisches Verbindungsmittel zum Verbinden beziehungsweise Kontaktieren der Gehäuserückwand mit der Elektrode auf. Dabei dient das mechanische Verbindungsmittel dazu, zwischen die eine Elektrode und die Gehäuserückwand eingespannt zu werden, um die Elektrode gegen die Membran zu drücken. Hierzu ist es erforderlich, dass das Textil elastisch verformbar ist und sich zudem als chemisch beständig gegenüber dem in der Elektrolysezelle herrschenden Medium erweist. Um diesen Anforderungen gerecht zu werden, ist das mechanische Verbindungsmittel aus einem elastischen Kunststoffmaterial, beispielsweise PTFE, PFA oder PP, gefertigt. Die mechanisch relevante Eigenschaft des elastischen Kunststoffmaterials ist sein Elastizitätsmodul, der ein Zusammenpressen des Textils beim Einbau ermöglicht und einen möglichst homogenen Anpressdruck der Elektrode gegen die Membran im eingebauten Zustand aufrechterhält. Zum Andrücken der Elektrode an die Membran wird somit erfindungsgemäß eine elastische Verformbarkeit des Textils genutzt, ohne dass es dabei eine signifikante plastische Verformung erfährt.

Die Anforderung an das elektrische Verbindungsmittel des Textils ist, dass ein elektrischer Kontakt zwischen Elektrode und Gehäuserückwand sicherstellt wird, um den bei der Elektrolyse fließenden Strom abführen zu können. Um die notwendige elektrische Leitfähigkeit bereitzustellen, wird das elektrische Verbindungsmittel in aller Regel metallisch ausgebildet sein. Ebenfalls ist eine Fertigung des metallischen Verbindungsmittels aus Graphit möglich.

Ein wesentlicher Vorteil der Verwendung des erfindungsgemäßen Textils zur Verbindung zwischen einem Gehäuse und einer Elektrode einer zero-gap-Elektrolysezelle ist, dass das im Stand der Technik erforderliche elastische Element durch das erfindungsgemäß verwendete Textil ersetzt wird, wobei die mechanische Funktion, das Anpressen der Elektrode an die Membran, von der elektrischen Funktion, dem Kontaktieren der aktiven Elektrode, entkoppelt ist. Diese Entkopplung erlaubt es, auf einen übermäßigen, kostenintensiven Nickeleinsatz zu verzichten und zudem ohne verschweißte Bauteile, die zum Stützen der aktiven Elektrode dienen, auszukommen. Durch dieses vereinfachte Design beziehungsweise das Vorsehen des erfindungsgemäßen Textils können sowohl die Materialkosten als auch der anfallende Herstellungsaufwand einer zero-gap-Elektrolysezelle reduziert werden. Zudem wird durch die erfindungsgemäße Verwendung des Textils ermöglicht, dass bei gleichen elastischen Eigenschaften des Textils beziehungsweise des Elastikelementes, eine deutlich größere Distanz überbrückt wird. Dies macht den kostenintensiven Unterbau einer Nickelstützstruktur entbehrlich.

Das erfindungsgemäße mechanische Verbindungsmittel weist eine aus Filamenten hergestellte Ober- und Unterware sowie eine Vielzahl die Ober- und Unterware verbindende Polfäden auf. Dabei bilden die Ober- und Unterware sowie die Polfäden eine matratzenartige Struktur, die zur Maximierung der Membranlebensdauer eine möglichst gleichmäßige Verteilung des Anpressdrucks ermöglicht, indem Druck auf die Unterware ausgeübt wird, sich eine Kompression der matratzenartigen Struktur einstellt und die Oberware ihrerseits die Elektrode gegen die Membran drückt. Von der anderen Membranseite aus wird die Membran durch eine zweite Elektrode, Anode beziehungsweise Kathode, kontaktiert, so dass durch die beschriebene Anordnung eine zero-gap-Elektrolysezelle entsteht. In einer bevorzugten Ausführungsform des erfindungsgemäßen Textils ist das mechanische Verbindungelement aus einem Kunststoffgewebe, bestehend aus Kunststofffilamenten, gebildet und weist eine gewebte Ober- und Unterware auf.

Die Kunststofffilamente weisen vorteilhafterweise einen Durchmesser von 0,1 - 0,5 mm auf. Dieser Bereich stellt einen guten Kompromiss aus mechanischen Eigenschaften, einer ausreichenden Strömungsdurchlässigkeit des Gesamtgewebes bei nicht zu geringem Abstand der Kunststofffilamente untereinander und der Verfügbarkeit am Markt dar.

In einer Weiterbildung dieser bevorzugten Weiterbildung des erfindungsgemäßen Textils ist das elektrische Verbindungelement durch Metalldrähte gebildet, die durch die Ober- und Unterware geführt sind. Das Durchstoßen der Metalldrähte durch die Oberund Unterware liegt darin begründet, dass nur so ein elektrischer Kontakt zwischen an der Oberware befindlichen Elektrode und an der Unterware befindlichen Gehäuserückwand erreicht werden kann. Verliefen die Metalldrähte lediglich zwischen den Innenseiten der Ober- und Unterware, wäre der angestrebte elektrische Kontakt nicht gegeben.

Sofern mehrere Lagen des Textils übereinander angeordnet werden sollen, was aus fertigungstechnischen Gründen - beispielsweise falls lediglich eine Maschine verfügbar ist, die ein Textil mit einer bestimmten maximalen Höhe herstellen kann oder ab einer gewissen Höhe des Textils keine ausreichende Rückstellkraft bei Verformung erzeugt wird - vorteilhaft sein kann, ist die Verteilung der die Ober- und Unterware durchstoßenden Metalldrähte und insbesondere deren Verlauf auf den äußeren, also zur Elektrode beziehungsweise Gehäuserückwand weisenden Seiten so zu wählen, dass sich beim Übereinaderschichten mehrerer Textile eine Vielzahl elektrisch kontaktierender Kreuzungspunkte der Metalldrähte benachbarter Lagen bilden. Ein zusätzlicher Grund für das Vorsehen mehrerer Lagen des erfindungsgemäß verwendeten Textils kann darin bestehen, anisotrope Eigenschaften des Textils bei Verformung auszugleichen. Wenn das Textil unter Belastung in eine Richtung ausweicht, dann dieses durch Drehen einer darüber liegenden Lage um 180° ausgeglichen werden. Hierdurch wird an der Oberfläche eine seitliche Verschiebung wirksam vermieden. In einer alternativen Weiterbildung der Erfindung sind die Metalldrähte durch mehrere Lagen übereinandergeschichteter Textile geführt, um den elektrischen Kontakt zwischen mehreren Lagen gewährleisten zu können.

Ferner hat sich als besonders vorteilhaft herausgestellt, wenn die Metalldrähte, insbesondere Nickeldrähte, zwischen den beiden Innenseiten einer matratzenartigen Struktur verlaufen eine gestreckte Länge aufweisen, die größer ist als die Höhe der matratzenartigen Struktur. Der dadurch erzielte bauchige Verlauf der Metalldrähte erzeugt eine zuverlässige elektrische Kontaktierung, ohne die mechanische Verformbarkeit des Textils zu beeinträchtigen. Im Zusammenspiel mit der vorbeschriebenen matratzenartigen Struktur und den elastischen Eigenschaften der Kunststofffilamente, kann die Kompression der matratzenartigen Struktur sogar bis zur Blocklage der Ober- und Unterware erfolgen, ohne dass die Metalldrähte oder die Kunststofffilamente Schaden, insbesondere durch eine plastische Verformung, nehmen.

Hinsichtlich der möglicherweise gewünschten Vorgabe der Verformungsrichtung bei Belastung kann es überdies von Vorteil sein, wenn ein Textil verwendet wird, bei dem die Metalldrähte in der Ruhelage eine geringere Distanz als der Abstand der matratzenartigen Struktur aufweisen.

Vorteilhafterweise wird der gesamte Leitungsquerschnitt über die Elektrolysezellfäche so groß gewählt, dass kein signifikanter Spannungsabfall durch das elektrische Verbindungsmittel entsteht. Es hat sich für eine aktive Elektrodenfläche von 1 m² ein Leitungsquerschnitt von 350-2100 mm² als geeignet herausgestellt.

Besonders bevorzugt verfügen die Metalldrähte über einen Durchmesser von 0,05 - 0,3 mm. Dies hat sich als guter Kompromiss hinsichtlich eines möglichst geringen Spannungsabfalls,einer guten elastischen Verformbarkeit und Verarbeitbarkeit der Drähte in gängigen Textilmaschinen herausgestellt.

Alternativ zu der vorbeschriebenen bevorzugten Ausführungsform, bei der die elektrischen Verbindungsmittel durch die Ober- und Unterware geführte Metalldrähte sind, kann das elektrische Verbindungsmittel durch eine elektrisch leitfähige Beschichtung der Polfäden realisiert sein. Die Beschichtung der Polfäden kann sowohl vor als auch nach dem Herstellungsprozess der matratzenartigen Struktur stattfinden. Zu beachten ist jedoch, dass durch die metallische Beschichtung, insbesondere die Dicke derselben, die mechanischen Eigenschaften der Polfäden nicht nachteilig beeinflusst werden.

In beiden beschrieben Ausführungsformen verfügen die Ober- und Unterware durch sie hindurchstoßende und in ihnen verwobene Metalldrähte beziehungsweise die in die Ober- und Unterware eingebundenen beschichteten Polfäden außenseitig über elektrisch leitfähige Kontaktstellen, so dass die Funktion als elektrisches Verbindungsmittel wirksam erfüllt wird.

Neben der erfindungsgemäßen Verwendung eines Textils betrifft die Erfindung auch eine zero-gap-Elektrolysezelle umfassend eine Anodenelektrode, eine Kathodenelektrode, eine zwischen Anoden- und Kathodenelektrode angeordnete lonenaustauschmembran, ein aus einer Anoden- und einer Kathodenwanne gebildetes Gehäuse, wobei zwischen mindestens einer der Elektroden und einer der Wannen mindestens eine Lage eines die jeweilige Elektrode und die jeweilige Wanne kontaktierenden erfindungsgemäßen Textils angeordnet ist. Ein Grund, der für eine Anordnung des erfindungsgemäßen Textils auf der Kathodenseite spricht, liegt darin, dass Nickel regelmäßig als metallisches Kathodenmaterial eingesetzt wird und in die Durchleitung des Betriebsstroms somit über eine reine Berührungskontaktierung erfolgen kann. Nickel ist in der Betriebsumgebung beständig und verfügt über eine gute elektrische Leitfähigkeit. Zudem existiert eine Vielzahl von Kunststoffen, die im Betriebsmedium der Kathode chemisch beständig sind, wie zum Beispiel Polyphenylensulfid, während beispielsweise auf der Anodenseite bei der Chloralkalielektrolyse Chlorgas entsteht, das die Verwendbarkeit von Werkstoffen stark einschränkt.

Überdies betrifft die Erfindung ein Verfahren zur Herstellung einer erfindungsgemäßen zero-gap-Elektrolysezelle, wobei in die Anoden- oder die Kathodenwanne mindestens eine Lage eines erfindungsgemäßen Textils eingelegt wird, auf der mindestens einen Lage des Textils eine Anoden- oder Kathodenelektrode angeordnet wird, auf diese Elektrode eine lonenaustauschmembran aufgelegt wird und auf der lonenaustauschmembran eine an eine Kathoden- beziehungsweise Anodenwanne angeschlossene Kathoden- beziehungsweise Anodenelektrode angeordnet wird.

Das erfindungsgemäße Verfahren zeichnet sich dadurch aus, dass es die Herstellung einer zero-gap-Elektrolysezelle mit dem erfindungsgemäßen Textil auf besonders einfache und kostengünstige Art und Weise ermöglicht.

Zur Sicherstellung der elektrischen Kontaktierung der Elektrode und Gehäuserückwand durch das erfindungsgemäße Textil ist es bei diesem Herstellungsverfahren besonders bevorzugt, das Textil mit einem Anpressdruck - gewissermaßen als Vorkomprimierung - zwischen Elektrode und Wanne einzubringen. Dabei hat sich ein Anpressdruck von etwa 100 - 150 mbar als besonders geeignet herausgestellt. Bei diesem Druck wird erwartet, dass der Berührungskontakt zwischen den leitfähigen Komponenten der Oberund Unterware und den angeschlossenen Komponenten, Gehäuserückwand und Elektrode, ausreichend Strom übertragen kann, dass also kein übermäßiger Spannungsabfall eintritt.

Nachfolgend ist die Erfindung anhand von Ausführungsbeispielen unter Bezugnahme auf die beigefügten Figuren beschrieben. Es zeigen:
Fig. 1: eine schematisierte perspektivische Seitenansicht der erfindungsgemäßen Verwendung eines Textils im unbelasteten Zustand (exklusive der Darstellung des elektrischen Verbindungsmittels),
Fig. 2: eine Seitenansicht des erfindungsgemäß verwendeten Textils gemäß Fig. 1 im belasteten Zustand,
Fig. 3: eine Seitenansicht des erfindungsgemäß verwendeten Textils gemäß Fig. 1 inklusive der Darstellung des mechanischen und elektrischen Verbindungsmittels,
Fig. 4: eine Seitenansicht des erfindungsgemäß verwendeten Textils gemäß einer alternativen Ausführungsform inklusive der Darstellung des mechanischen und zusätzlich im Querschnitt dargestellten elektrischen Verbindungsmittels und
Fig. 5: Darstellung des erfindungsgemäßen Verfahrens zur Herstellung einer zero-gap-Elektrolysezelle.

In den verschiedenen Figuren sind gleiche Teile stets mit den gleichen Bezugszeichen versehen und werden daher in der Regel auch jeweils nur einmal benannt beziehungsweise erwähnt.

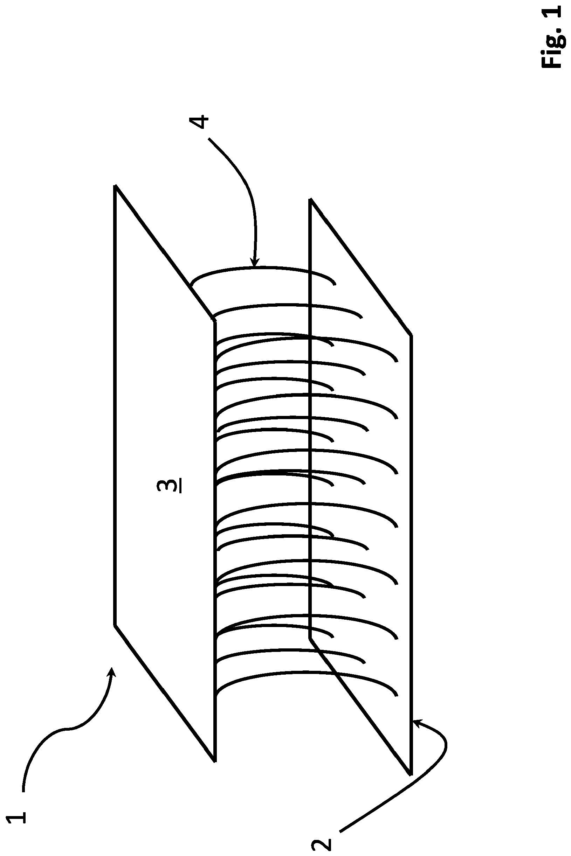

Die Verwendung eines Textils 1 zur Verbindung zwischen einem Gehäuse und einer Elektrode einer zero-gap-Elektrolysezelle ist in Fig. 1 exemplarisch im unbelasteten Zustand gezeigt. Dabei ist ausschließlich das mechanische Verbindungsmittel abgebildet, während das elektrische Verbindungsmittel aus Gründen der Übersichtlichkeit nicht dargestellt ist. Das erfindungsgemäß verwendete Textil 1 umfasst eine aus Filamenten gewebte Ober- und Unterware 2, 3 sowie die Ober- und Unterware 2, 3 verbindende Polfäden 4. Die Ober- und Unterware 2, 3 sind eben und parallel zueinander verlaufend ausgebildet, da sie im zwischen Elektrode und Gehäuserückwand einer Elektrolysehalbzelle eingebauten Zustand zum möglichst gleichmäßigen Übertragen einer auf die Gehäuserückwand einwirkenden, in das Innere der Elektrolysezelle gerichteten Kraft dienen. Sofern die Gehäuserückwand mit einer zum Inneren der Elektrolysezelle weisenden Kraft beaufschlagt wird, überträgt die Unterware 2 - vermittelt über die Polfäden 4 - die Kraft an die eine Elektrode kontaktierende Oberware 3. Zur Verringerung der Richtungsabhängigkeit der Verformung kann auch ein Textil verwendet werden, bei dem sich die mechanischen Verbindungsmittel überkreuzen, so dass keine mechanische Vorzugsrichtung entsteht.

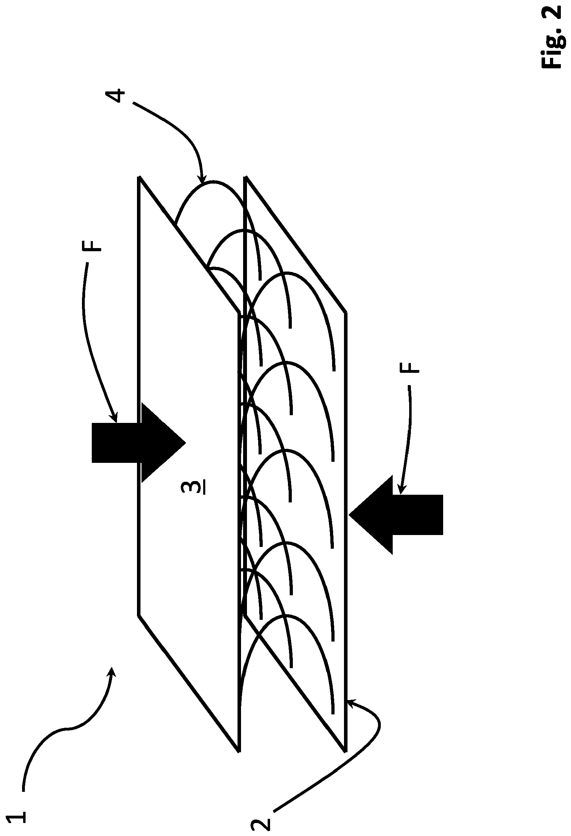

Diese Kraftübertragung ist schematisch in Fig. 2, die die Darstellung eines belasteten Textils zeigt, wiedergegeben. Dabei korrespondiert der untere Kraftpfeil zu einer mit der Kraft F auf die Unterware 2 einwirkenden Gehäuserückwand, welche nicht dargestellt ist. Vermittelt über die sich durch die Krafteinwirkung elastisch deformierten Polfäden 4 wird die Kraft F auf die Oberware 3 übertragen, wobei diese die Kraft F an eine ebenfalls nicht dargestellte, die Oberware 3 kontaktierende Elektrode weitergeben, um die Elektrode gleichmäßig und somit besonders schonend an die Membran zu drücken beziehungsweise die Elektrode ohne den Einsatz von zusätzlichen Bauteilen, insbesondere verschweißen Blechen oder Streckmetallen, in Position zu halten. Dabei erweist sich als besonders vorteilhaft, dass das mechanische Verbindungsmittel aus einem elastischen Kunststoffmaterial, hier: Kunststofffilamenten, besteht, da hierdurch plastische Verformungen wirksam vermieden werden können, so dass die Lebensdauer des erfindungsgemäßen Textils 1 durch die Einwirkung der Kraft F nicht beeinträchtigt wird.

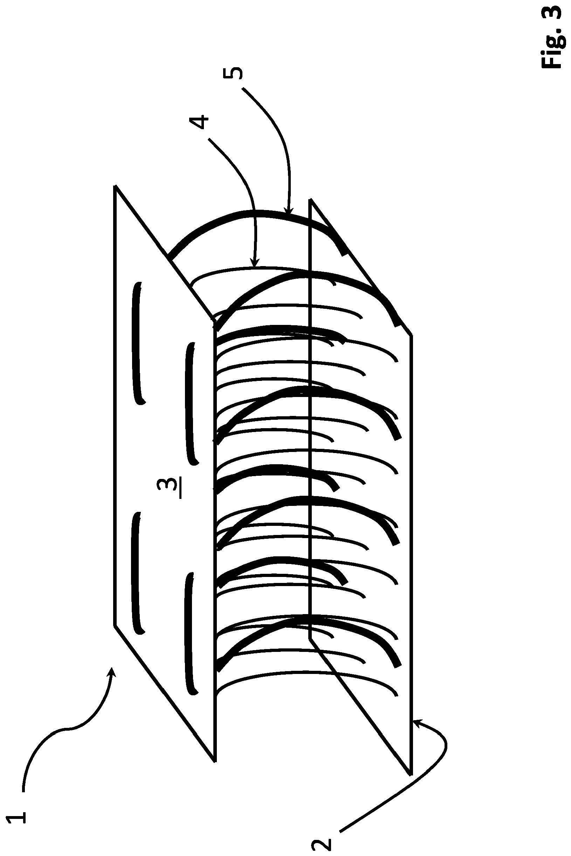

In Fig. 3, welche dasselbe Ausführungsbeispiel wie Fig. 1 betrifft, ist neben dem mechanischen Verbindungsmittel, welches in Fig. 1 und Fig. 2 für unterschiedliche Belastungszustände gezeigt ist, auch das elektrische Verbindungsmittel abgebildet. Das elektrische Verbindungsmittel ist in diesem Ausführungsbeispiel durch Metalldrähte 5 realisiert, die durch die Ober- und Unterware 2, 3 geführt sind. Dabei ist zu erkennen, dass ein sich von der Unterware 2 erstreckender Metalldraht 5 durch die nach unten weisende Seite der Oberware 3 hindurchstößt und auf der nach oben weisenden Seite der Oberware 3 im Wesentlichen parallel zur Ebene der Oberware 3 verläuft, um die nach oben weisende Seite der Oberware 3 erneut zu durchstoßen, um analog auch durch die Unterware 2 geführt zu werden. Hierdurch wird die nach unten weisende Seite der Unterware 2 sowie die nach oben weisende Seite der Oberware 3 mit Metalldraht 5 versehen, sodass eine zuverlässige elektrisch leitfähige Verbindung zum Kontaktieren der Gehäuserückwand und der Elektrode hergestellt ist, ohne einen übermäßigen Einsatz von Metall, insbesondere Nickel, vornehmen zu müssen.

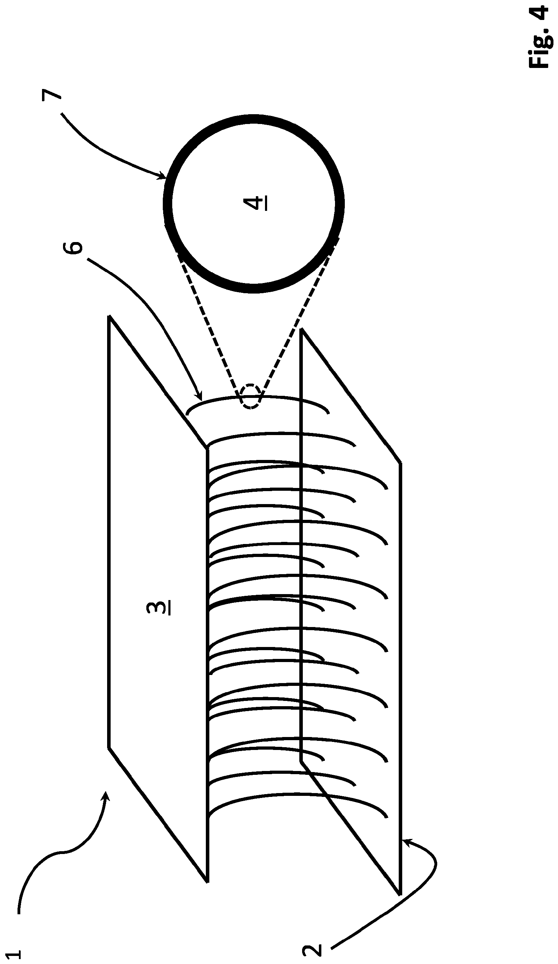

Fig. 4 zeigt eine Seitenansicht des erfindungsgemäß verwendeten Textils gemäß einer alternativen Ausführungsform inklusive der Darstellung des mechanischen und elektrischen Verbindungsmittels. Bei dieser Ausführungsform sind die Ober- und Unterware 2, 3 des mechanischen Verbindungmittels durch beschichtete Polfäden 6 miteinander verbunden, und zwar sowohl mechanisch als auch elektrisch. Die mechanische Verbindung der Ober- und Unterware 2, 3 erfolgt dabei wie in der vorbeschriebenen bevorzugten Ausführungsform gemäß Fig. 1 bis 3 durch Polfäden 4 aus elastischen Kunststofffilamenten. Die elektrische Verbindung der Ober- und Unterware 2, 3 und damit der angrenzenden Gehäuserückwand sowie Elektrode wird - wie durch die Querschnittsdarstellung eines beschichteten Polfadens 6 verdeutlicht wird - über eine elektrisch leitfähige Beschichtung 7 der Polfäden 4 realisiert. Dabei kann die Herstellung der beschichteten Polfäden 6 durch Beschichtung der Polfäden 4 mit einer elektrisch leitfähigen Schicht, vorzugsweise einem Metall, sowohl vor als auch nach dem Webvorgang durchgeführt worden sein.

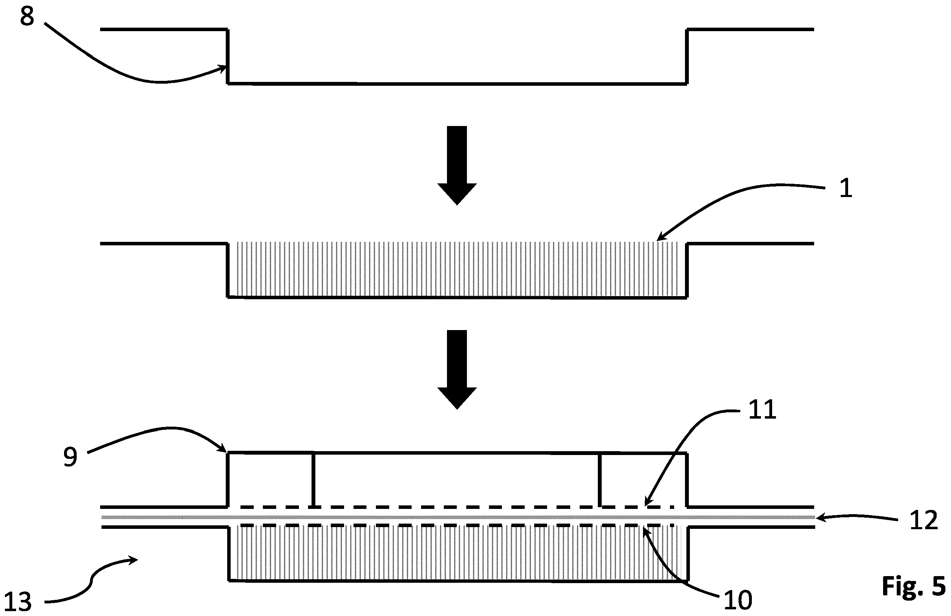

Eine Darstellung des erfindungsgemäßen Verfahrens zur Herstellung einer erfindungsgemäßen zero-gap-Elektrolysezelle ist in Fig. 5 dargestellt (von oben nach unten). In einem ersten Schritt wird eine in eine Anoden- oder Kathodenwanne 8, 9, hier: die Kathodenwanne 8, die auch als Gehäuserückwand angesprochen wird, mindestens eine Lage eines Textils 1 eingelegt. Anschließend wird auf der mindestens eine Lage des Textils 1 eine Anoden- oder Kathodenelektrode 10, 11, hier: die Kathodenelektrode 10, angeordnet, bevor auf diese eine lonenaustauschmembran 12 aufgelegt wird. Zur Fertigstellung der zero-gap-Elektrolysezelle 13 wird abschließend auf die lonenaustauschmembran 12 eine an eine Kathoden- beziehungsweise Anodenwanne 8,9, hier: die Anodenwanne 9, angeschlossene Kathodenbeziehungsweise Anodenelektrode 10, 11, hier: Anodenelektrode 11, angeordnet.

### Bezugszeichenliste

- 1: Textil
- 2: Unterware
- 3: Oberware
- 4: Polfaden
- 5: Metalldraht
- 6: beschichteter Polfaden
- 7: elektrisch leitfähige Beschichtung
- 8: Kathodenwanne
- 9: Anodenwanne
- 10: Kathodenelektrode
- 11: Anodenelektrode
- 12: lonenaustauschmembran
- 13: Zero-gap-Elektrolysezelle
- F: Kraft

## Patentansprüche

1. Verwendung eines Textils als Beabstandungsmittel zwischen einem Gehäuse oder einer Stützstruktur und einer Elektrode oder dem Unterbau einer Elektrode einer zero-gap-Elektrolysezelle (13), wobei das Textil (1) sowohl ein mechanisches Verbindungsmittel aus einem elastischen Kunststoffmaterial als auch ein sich von dem mechanischen Verbindungsmittel unterscheidendes elektrisches Verbindungsmittel umfasst, **dadurch gekennzeichnet, dass** das mechanische Verbindungsmittel eine aus Filamenten hergestellte Ober- und Unterware (2, 3) sowie die Ober- und Unterware (2, 3) verbindende Polfäden (4) aufweist.

2. Verwendung eines Textils nach Anspruch 1, **dadurch gekennzeichnet, dass** das elektrische Verbindungsmittel Metalldrähte (5) umfasst, die durch die Oberund Unterware (2, 3) geführt sind.

3. Verwendung eines Textils nach Anspruch 2, **dadurch gekennzeichnet, dass** die Metalldrähte (5) einen Durchmesser von 0,05 - 0,3 mm aufweisen.

4. Verwendung eines Textils nach Anspruch 1, **dadurch gekennzeichnet, dass** das elektrische Verbindungsmittel als eine elektrisch leitfähige Beschichtung (7) der Polfäden (4) ausgeführt ist.

5. Verwendung eines Textils nach einem der Ansprüche 2 bis 4, **dadurch gekennzeichnet, dass** die Metalldrähte (5) beziehungsweise die elektrische Beschichtung (7) der Polfäden (4) aus Nickel oder einer Nickellegierung gefertigt sind.

6. Verwendung eines Textils nach einem der Ansprüche 1 bis 5, **dadurch gekennzeichnet, dass** die Filamente des mechanischen Verbindungsmittels einen Durchmesser von 0,1 - 0,5 mm aufweisen.

7. Zero-gap-Elektrolysezelle umfassend eine Anodenelektrode (11), eine Kathodenelektrode (10), eine zwischen Anoden- und Kathodenelektrode (10, 11) angeordnete lonenaustauschmembran (12) und ein aus einer Anoden- und einer Kathodenwanne (8, 9) gebildetes Gehäuse, wobei zwischen mindestens einer der Elektroden (10, 11) und einer der Wannen (8, 9) mindestens eine Lage eines die jeweilige Elektrode (10, 11) und die jeweilige Wanne (8, 9) kontaktierenden Textils (1), welches sowohl ein mechanisches Verbindungsmittel aus einem elastischen Kunststoffmaterial als auch ein sich von dem mechanischen Verbindungsmittel unterscheidendes elektrisches Verbindungsmittel umfasst, angeordnet ist, **dadurch gekennzeichnet, dass** das mechanische Verbindungsmittel eine aus Filamenten hergestellte Ober- und Unterware (2, 3) sowie die Ober- und Unterware (2, 3) verbindende Polfäden (4) aufweist.

8. Zero-gap-Elektrolysezelle nach Anspruch 7, **dadurch gekennzeichnet, dass** die mindestens eine Lage des Textils (1) die Kathodenelektrode (10) und die Kathodenwanne (8) kontaktiert.

9. Verfahren zur Herstellung einer zero-gap-Elektrolysezelle nach einem der Ansprüche 7 bis 8, **dadurch gekennzeichnet, dass** in die Anoden- oder die Kathodenwanne (8, 9) mindestens eine Lage eines Textils (1) eingelegt wird, dass auf der mindestens einen Lage des Textils (1) eine Anoden- oder Kathodenelektrode (10, 11) angeordnet wird, dass auf diese Elektrode eine lonenaustauschmembran (12) aufgelegt wird und dass auf der lonenaustauschmembran (12) eine an eine Kathoden- beziehungsweise Anodenwanne (8, 9) angeschlossene Kathoden- beziehungsweise Anodenelektrode (10, 11) angeordnet wird.

10. Verfahren zur Herstellung einer zero-gap-Elektrolysezelle nach Anspruch 9, **dadurch gekennzeichnet, dass** das Textil (1) beim Einbringen zwischen Elektrode und Wanne derart gestaucht wird, dass es mit einem aus der Elastizität des mechanischen Verbindungsmittels resultierenden Anpressdruck an der Elektrode und der Wanne anliegt.

11. Verfahren zur Herstellung einer zero-gap-Elektrolysezelle nach Anspruch 10, **dadurch gekennzeichnet, dass** der Anpressdruck im Bereich von 100 - 150 mbar gewählt wird.

## Claims

1. The use of a textile as a spacer between a housing or a supporting structure and an electrode or the substructure of an electrode of a zero-gap electrolytic cell (13), wherein the textile (1) comprises a mechanical connection means composed of an elastic polymeric material and comprises an electrical connection means different from the mechanical connection means, **characterized in that** the mechanical connection means has top and bottom fabrics (2, 3) made of filaments and has pile threads (4) connecting the top and bottom fabrics (2, 3).

2. The use of a textile as claimed in claim 1, **characterized in that** the electrical connection means comprises metal wires (5) passing through the top and bottom fabrics (2, 3).

3. The use of a textile as claimed in claim 2, **characterized in that** the metal wires (5) have a diameter of 0.05 - 0.3 mm.

4. The use of a textile as claimed in claim 1, **characterized in that** the electrical connection means is configured as an electrically conductive coating (7) of the pile threads (4).

5. The use of a textile as claimed in any of claims 2 to 4, **characterized in that** the metal wires (5) and/or the electrical coating (7) of the pile threads (4) are manufactured of nickel or a nickel alloy.

6. The use of a textile as claimed in any of claims 1 to 5, **characterized in** the filaments of the mechanical connection means have a diameter of 0.1 - 0.5 mm.

7. A zero-gap electrolytic cell comprising an anode electrode (11), a cathode electrode (10), an ion exchange membrane (12) disposed between anode and cathode electrodes (10, 11), and a housing formed of an anode tank and a cathode tank (8, 9), wherein, disposed between at least one of the electrodes (10, 11) and one of the tanks (8, 9) is at least one ply of a textile (1) which contacts the respective electrode (10, 11) and the respective tank (8, 9) and which comprises a mechanical connection means composed of an elastic polymeric material and comprises an electrical connection means different from the mechanical connection means, **characterized in that** the mechanical connection means has top and bottom fabrics (2, 3) made of filaments and has pile threads (4) connecting the top and bottom fabrics (2, 3).

8. The zero-gap electrolytic cell as claimed in claim 7, **characterized in that** the at least one ply of the textile (1) contacts the cathode electrode (10) and the cathode tank (8).

9. A method for producing a zero-gap electrolytic cell as claimed in either of claims 7 and 8, **characterized in that** at least one ply of a textile (1) is placed into the anode tank or the cathode tank (8, 9), **in that** an anode electrode or cathode electrode (10, 11) is disposed on the at least one ply of the textile (1), **in that** an ion exchange membrane (12) is placed onto this electrode, and **in that** a cathode electrode or anode electrode (10, 11) connected to a cathode tank or anode tank (8, 9), respectively, is disposed on the ion exchange membrane (12).

10. The method for producing a zero-gap electrolytic cell as claimed in claim 9, **characterized in that** on introduction between electrode and tank the textile (1) is compressed such that it lies against the electrode and the tank with a contact pressure resulting from the elasticity of the mechanical connection means.

11. The method for producing a zero-gap electrolytic cell as claimed in claim 10, **characterized in that** the contact pressure selected is in the range of 100 - 150 mbar.

## Revendications

1. Utilisation d'un textile comme moyen d'espacement entre un boîtier ou une structure de support et une électrode ou l'infrastructure d'une électrode d'une cellule d'électrolyse à espacement nul (13), le textile (1) comprenant à la fois un moyen de liaison mécanique en matière synthétique élastique et un moyen de liaison électrique différent du moyen de liaison mécanique, **caractérisée en ce que** le moyen de liaison mécanique comprend des tissus supérieur et inférieur (2, 3) réalisés à partir de filaments et des fils de poil (4) reliant les tissus supérieur et inférieur (2, 3).

2. Utilisation d'un textile selon la revendication 1, **caractérisée en ce que** le moyen de liaison électrique comprend des fils métalliques (5) qui sont guidés à travers les tissus supérieur et inférieur (2, 3).

3. Utilisation d'un textile selon la revendication 2, **caractérisée en ce que** les fils métalliques (5) ont un diamètre de 0,05 à 0,3 mm.

4. Utilisation d'un textile selon la revendication 1, **caractérisée en ce que** le moyen de liaison électrique est réalisé sous la forme d'un revêtement électriquement conducteur (7) des fils de poil (4).

5. Utilisation d'un textile selon l'une des revendications 2 à 4, **caractérisée en ce que** les fils métalliques (5) ou le revêtement électrique (7) des fils de poil (4) sont en nickel ou en un alliage de nickel.

6. Utilisation d'un textile selon l'une des revendications 1 à 5, **caractérisée en ce que** les filaments des moyens de liaison mécanique ont un diamètre de 0,1 à 0,5 mm.

7. Cellule d'électrolyse à espacement nul comprenant une électrode anodique (11), une électrode cathodique (10), une membrane échangeuse d'ions (12) disposée entre les électrodes anodique et cathodique (10, 11) et un boîtier formé de cuves anodique et cathodique (8, 9), au moins une couche d'un textile (1), qui est en contact avec l'électrode respective (10, 11) et la cuve respective (8, 9) et qui comprend aussi bien un moyen de liaison mécanique en matière synthétique élastique et un moyen de liaison électrique différent du moyen de liaison mécanique, étant disposée entre au moins une des électrodes (10, 11) et une des cuves (8, 9), **caractérisée en ce que** le moyen de liaison mécanique comporte des tissus supérieur et inférieur (2, 3) formés de filaments et des fils de poils (4) reliant les tissus supérieur et inférieur (2, 3).

8. Cellule d'électrolyse à espacement nul selon la revendication 7, **caractérisée en ce que** l'au moins une couche du textile (1) est en contact avec l'électrode cathodique (10) et la cuve cathodique (8).

9. Procédé de fabrication d'une cellule d'électrolyse à espacement nul selon l'une des revendications 7 à 8, **caractérisé en ce qu'**au moins une couche d'un textile (1) est insérée dans la cuve anodique ou cathodique (8, 9), **en ce qu'**au moins une électrode anodique ou cathodique (10, 11) est disposée sur l'au moins une couche du textile (1), **en ce qu'**une membrane échangeuse d'ions (12) est placée sur cette électrode et **en ce qu'**une électrode anodique respectivement cathodique (10, 11), qui est raccordée à une cuve anodique respectivement cathodique (8, 9), est disposée sur la membrane échangeuse d'ions (12).

10. Procédé de fabrication d'une cellule d'électrolyse à espacement nul selon la revendication 9, **caractérisé en ce que** le textile (1) est comprimé lors de son introduction entre l'électrode et la cuve de manière à être appliqué contre l'électrode et la cuve avec une pression de contact résultant de l'élasticité du moyen de liaison mécanique.

11. Procédé de fabrication d'une cellule d'électrolyse à espacement nul selon la revendication 10, **caractérisé en ce que** la pression de contact est choisie dans la plage de 100 à 150 mbar.
